# EUROPÄISCHE PATENTSCHRIFT

(11) **EP 0 715 889 B1**
(45) Veröffentlichungstag und Bekanntmachung des Hinweises auf die Patenterteilung: **23.05.2001**
(21) Anmeldenummer: 95117569.4
(22) Anmeldetag: 08.11.1995
(51) Int. Cl.: B01J 37/00, B01J 37/02

(54) **Schalenkatalysatoren, Verfahren zu ihrer Herstellung und ihre Verwendung**
Shell catalyst, process for its preparation and its use
Catalyseur en coque, procédé pour le préparer et son utilisation

(30) Priorität: 08.12.1994 DE 4443701
(43) Veröffentlichungstag der Anmeldung: 12.06.1996
(73) Patentinhaber: dmc2 Degussa Metals Catalysts Cerdec AG, 60287 Frankfurt am Main (DE)
(72) Erfinder: Freund, Andreas, Dr., D-63801 Kleinostheim (DE); Panster, Peter, Dr., D-63517 Rodenbach (DE)

(56) Entgegenhaltungen:
- EP-A- 0 050 300
- EP-A- 0 580 559
- US-A- 4 136 059
- US-A- 5 147 841

## Beschreibung

Die vorliegende Erfindung betrifft Schalenkatalysatoren, die auf einenm pulverförmigen oder geformten Träger ein oder mehrere Metalle aus den Gruppen VIII und IB des Periodensystems enthalten sowie ein Verfahren zu ihrer Herstellung unter Verwendung von vorgeformten, tensidstabilisierten mono- oder bimetallischen Kolloiden der betreffenden Metalle und die Verwendung der Katalysatoren.

Schalenkatalysatoren, bei denen die katalytisch aktiven Komponenten - in der Regel bestimmte Metalle oder Edelmetalle - im wesentlichen auf eine mehr oder weniger breite oberflächliche Schale der Katalysatorpartikel konzentriert sind, werden bevorzugt bei katalytischen Reaktionen eingesetzt, bei denen die Gefahr besteht, daß es bei zu langem Kontakt der Reaktanden mit den katalytisch aktiven Komponenten zu Überreaktionen kommt. Sie werden auch bevorzugt in solchen Reaktionen eingesetzt, in denen der Stofftransport zu den katalytisch aktiven Komponenten im Inneren der Katalysatorpartikel die katalytische Aktivität begrenzt.

Die Herstellung von Schalenkatalysatoren insbesondere auf porösen Trägern mit konventionellen Imprägniertechniken macht zumeist die Vorbelegung der Katalysatorpartikel mit Reagenzien und Stoffen notwendig, die ein tiefes Eindringen der katalytischen Komponenten in die Katalysatorpartikel verhindern. Trotzdem sind mit diesen Techniken nur relativ große Schalendicken von über 0,1 mm möglich.

Geringere Schalendicken lassen sich mit kolloidalen Techniken erzielen, bei denen die katalytisch aktiven Komponenten in Form von Kolloiden auf den Katalysatorpartikeln bzw. Katalysatorträgern abgeschieden werden.

Die bekannten Kolloidtechniken umfassen teilweise die separate Herstellung der Metallkolloide und/oder in situ-Verfahren ohne Isolierung der intermediär auftretenden kolloidalen Metallteilchen. Die Metallkolloide können sowohl in reduzierter Form als auch in unreduzierter Form vorliegen.

Nakao et al. [J. Colloid Interface Sci., 131 (1989) 186] beschreiben die Adsorption von wäßrigen, tensidstabilisierten Edelmetallkolloiden auf Ionenaustauschern. Als neutrale, kationische und anionische Tenside wurden beispielsweise Polyethylenglykolether, Tetraalkylammoniumhalogenide oder Alkylbenzolsulfonate eingesetzt. Der Metallgehalt der Edelmetallkolloidlösungen war kleiner 0.1g/l (ca. 0.01 Gew.-% Metall).

A. Honji et al. [(J. Electrochem. Soc., 131 (1990)] beschreiben die Verwendung von Zuckerestern langkettiger Carbonsäuren, wie z. B. Sorbitanmonolaurat, für die Herstellung von tensidstabilisierten Pt-Kolloiden. Als Reduktionsmittel wird Methanol im großen Überschuß eingesetzt. Die Herstellung des Kolloids findet bevorzugt in situ in Gegenwart eines Trägers statt.

Das Dokument EP 0 050 300 A 2 beschreibt einen Katalysator, der auf einem Träger Edelmetallkolonien mit nicht mehr als 20 Primärteilchen an Edelmetall aufweist. Das Auftragen der Metallteilchen erfolgt durch eine In-situ-Reduktion wäsriger Lösung.

Das Dokument EP 0 580 559 A 1 beschreibt ein Verfahren zur Herstellung eines Platin-Katalysators auf einem Träger, wobei an einem Platinkomplex mit unbekannter Struktur das Metall durch In-situ-Reduktion ausgefällt wird.

Die bekannten Verfahren haben den Nachteil, daß im Vergleich zu konventionellen Imprägnierverfahren aus Stabilitätsgründen hochverdünnte, kolloidale Lösungen verwendet werden müssen. Damit lassen sich jedoch nur Katalysatoren mit relativ geringen Metallbeladungen herstellen. Typisch für solche Katalysatoren sind Metallbeladungen unter 1 Gew.-% bezogen auf die Trockenmasse der Katalysatoren. Höhere Metallbeladungen über 5 oder gar über 10 Gew.-%, wie sie zum Beispiel für Brennstoffzellenkatalysatoren benötigt werden, sind mit den hochverdünnten, kolloidalen Lösungen nicht herstellbar. Die in situ-Verfahren erlauben zwar den Einsatz von höher-konzentrierten Produktionsansätzen, aber die Eigenschaften der so erzeugten Kolloidteilchen sowie deren Fixierung auf den Trägern kann nur in begrenzten Umfange gesteuert werden. Eine Vielzahl von kritischen Präparationsparametern, wie z.B. Temparatur, Konzentrationen von Basen und Reduktionsmittel etc., müssen sehr genau und oft gleichzeitig eingestellt werden, um das Metallkolloid in der gewünschten Form auf einem Träger abzuscheiden.

Aufgabe der vorliegenden Erfindung ist es, Schalenkatalysatoren anzugeben, die eine gute Zugänglichkeit der katalytisch aktiven Metalle und eine hohe Aktivität bei verschiedenen katalytischen Reaktionen wie der Hydrierung und Oxidation organischer Verbindungen und auch bei der katalytischen Reduktion von Sauerstoff in Brennstoffzellen aufweisen. Weiterhin ist es Aufgabe der vorliegenden Erfindung, ein Verfahren zur Herstellung dieser Katalysatoren anzugeben, welches die beschriebenen Nachteile vermeidet.

Die erste Aufgabe der Erfindung wird gelöst durch Schalenkatalysatoren, die auf einem pulverförmigen Träger ein oder mehrere Metalle aus den Gruppen VIII und IB des Periodensystems enthalten. Die Katalysatoren sind dadurch gekennzeichnet, daß die Metalle auf dem Träger in feinverteilter Form innerhalb einer Oberflächenschale von höchstens 200, bevorzugt von höchstens 100 nm, Dicke mit Kristallitgrößen von höchstens 10, vorzugsweise kleiner 3 nm, in Konzentrationen von 0,05 bis 35 Gew.-% bezogen auf die Trockenmasse der Katalysatoren vorliegen, erhältlich wird Verwendung von vorgeformten tensidstabilisierten mono-oder bimetallischen Kolloiden von Metallen aus den Gruppen VIII und Ib des Periodensystems, wobei die Kolloide durch stark hydrophile Tenside stabilisiert sind und zur Belegung von Trägern wäßrige Lösungen eines oder mehrerer dieser Kolloide eingesetzt werden.

Die Konzentration der katalytisch aktiven Metalle auf eine oberflächliche Schale weniger als 200 nm Dicke gewährleistet eine gute Zugänglichkeit der aktiven Zentren für die jeweiligen Reaktanden der beabsichtigten katalytischen Umsetzung.

Die erfindungsgemäßen Katalysatoren können mit den katalytischen aktiven Komponenten in Konzentrationen zwischen 0,05 bis 35 Gew.-% beladen sein. Bevorzugt sind Konzentrationen zwischen 0,5 und 35, insbesondere zwischen 0,5 und 5 Gew.-%, wenn es sich bei den katalytischen Reaktionen um die Hydrierung oder Oxidation organischer Verbindungen handelt.

Bei Verwendung als Elektrokatalysatoren in Brennstoffzellen liegen die bevorzugten Beladungen zwischen 7,5 und 35 Gew.-%. Selbst bei diesen hohen Konzentrationen weisen die erfindungsgemäßen Katalysatoren mit Kristallitgrößen der katalytisch aktiven Metalle von höchstens 10 nm, vorzugsweise höchstens 3 nm, eine sehr gute Dispersion dieser Metalle auf.

Als Träger für die Katalysatoren eignen sich pulverförmige als auch geformte Träger aus Kohlenstoff, und aus Oxiden eines oder mehrerer Metalle der Gruppen IIA bis VA sowie IB bis VIIB und VIII des Periodensystems. Weiterhin eignen sich Carbonate, Sulfate, Zeolithe, organofunktionelle Polysiloxane und Ionenaustauscherharze als Träger. Die Wahl des geeigneten Trägermaterials hängt von der beabsichtigten katalytischen Umsetzung ab. Für die Hydrierung oder Oxidation organischer Verbindungen sowie die katalytische Reduktion von Sauerstoff in Brennstoffzellen werden bevorzugt Kohlenstoffträger eingesetzt, die entweder hydrophil oder hydrophob sein können.

Die zweite Aufgabe der Erfindung wird gelöst durch ein Verfahren zur Herstellung von Schalenkatalysatoren unter Verwendung von vorgeformten, tensidstabilisierten mono-oder bimetallischen Kolloiden von Metallen aus den Gruppen VIII und IB des Periodensystems. Das Verfahren ist dadurch gekennzeichnet, daß die Kolloide durch stark hydrophile Tenside stabilisiert sind und zur Belegung der Träger wäßrige Lösungen eines oder mehrerer dieser Kolloide eingesetzt werden.

Für die Stabilisierung der Metallkolloide sind Tenside mit ein oder mehreren hydrophilen Gruppen vorteilhaft, wie zum Beispiel Betaine, kationische Tenside, Fettalkohol-Polyglykolether, Polyoxymethylen-Kohlenhydrat-Fettalkylester und anionische Tenside oder amphiphile Zuckertenside. Als Betaine eignen sich zum Beispiel (Trialkylammonio)-alkylsulfonate, Alkyl-N,N-dimethyl-N-carboxymethyl-ammoniumbetain und Alkylamidopropylbetaine. Insbesondere 3-(Dimethyldodecylammonio)propansulfonat (Sulfobetain 12®), Lauryl-N,N-dimethyl-N-carboxymethyl-ammoniumbetain (Rewoteric AM DML®) oder Cocoamidopropylbetain haben sich als vorteilhaft erwiesen.

Als kationische Tenside können (Chlorhydroxypropyl)alkyl-dimethylammoniumsalze, insbesondere Quab 360®, Quab 342® oder Quab 426® (Markenzeichen der Degussa) eingesetzt werden. Als Fettalkohol-polyglykolether eignet sich beispielsweise Polyoxyethylenlaurylether. Ein bevorzugter Polyoxyethylen-Kohlenhydrat-Fettalkylester ist das entsprechende Sorbitanmonolaurat. Ein Beispiel für anionische Tenside ist das Natrium-Cocoamidoethyl-N-hydroxiethyl-glycinat. Als amphiphile Zuckertenside kann auch die Klasse der Alkylpolyglykoside zur Stabilisierung der Metallkolloide eingesetzt werden.

Vorgeformte, mono- und bimetallische Kolloide der Gruppen VIII und Ib des Periodensystems können durch Reduktion ihrer Salze in Gegenwart der obengenannten stark hydrophilen Tenside sowohl in wäßriger als auch organischer Phase erhalten werden. Durch die Trennung der Kolloidherstellung von der Trägerfixierung kann eine gezielte Einstellung der Teilchengröße der Metallkolloide erfolgen. Die mittlere Teilchengröße der Kolloide läßt sich durch die Konzentration des Schutzkolloids, die Art des Lösungsmittels und/oder des Reduktionsmittels, und durch die Temperatur bei der Herstellung in einem Bereich zwischen 1 und etwa 50 nm variieren. Für die Anwendungen in der Katalyse sind mittlere Teilchengrößen unter 10 nm vorteilhaft. Bevorzugt werden mittlere Teilchengrößen unter 5, insbesondere unter 3 nm eingesetzt.

Die Metallkolloide fallen bei der Herstellung in gelöster Form an. Zur Fixierung auf Trägermaterialien können direkt diese Lösungen ohne weitere Behandlung verwendet werden. Bevorzugt werden die Kolloide jedoch vor der Weiterverarbeitung in Form von Pulvern isoliert.

Dies ist insbesondere bei Herstellung der Metallkolloide in organischen Lösungsmitteln vorteilhaft. Dadurch kann bei der nachfolgenden Trägerfixierung auf die Verwendung von organischen Lösungsmitteln verzichtet werden. Das erfindungsgemäße Herstellverfahren der Katalysatoren erfordert keine zusätzlichen Maßnahmen bezüglich des Umweltschutzes, da es in bestehenden Produktionsanlagen angewandt werden kann.

Die Metallkonzentrationen an der Trockenmasse der Kolloidpulver betragen gewöhnlich wenigstens 5 Gew.-%.

Höhere Metallkonzentrationen im Pulver sind durch Abtrennung von Elektrolyt und/oder durch geringere Tensidkonzentrationen bei der Kolloidherstellung möglich. Diese höheren Metallgehalte können bei der Adsorption der Kolloide auf bestimmten Trägermaterialien von Vorteil sein.

Die pulverförmigen Metallkolloide können auf einfache Weise in Wasser redispergiert werden. Dies kann unmittelbar oder mehrere Wochen vor der weiteren Verwendung der Metallkolloide erfolgen. Ein besonderer Vorteil des erfindungsgemäßen Verfahrens gegenüber dem Stand der Technik ist die Tatsache, daß mit den durch stark hydrophile Tenside stabilisierten Kolloiden sehr hohe Metallkonzentrationen in Lösung erhalten werden können. Es können Metallgehalte von bis zu 25 Gew.-% in Lösung eingestellt werden. Dieser Konzentrationsbereich der Metallkolloidlösung liegt in derselben Größenordnung wie die Konzentration vieler Metallsalzlösungen. Metallkolloidlösungen können deshalb z.B.auch als Alternative bei der Herstellung von Festbettkatalysatoren nach dem Porenvolumen-Imprägnierverfahren oder Tauchverfahren zur Imprägnierung von Wabenkörpern oder anderer katalytischer Strukturen eingesetzt werden.

Die Fixierung der Metallkolloide auf pulverförmigen Trägermaterialien erfolgt durch Zugabe der kolloidalen Lösung zu einer wäßrigen Trägersuspension oder durch Zugabe des Trägers zur kolloidalen Lösung. Die Adsorption kann bei Raumtemperatur erfolgen. Es ist jedoch zweckmäßig, die Temperatur der Lösung während des Adsorptionsvorganges auf wenigstens 30°C anzuheben, um die Adsorption insbesondere bei Metallbeladungen der Katalysatoren von größer 3 Gew.-% zu beschleunigen. Vorteilhafterweise wird die Lösungstemperatur auf einen Wert zwischen 30 und 95, bevorzugt zwischen 50 und 85°C eingestellt. Dadurch kann die Dauer bis zur vollständigen Adsorption auf unter eine Stunde, in günstigen Fällen auf unter eine halbe Stunde, verringert werden.

Alternativ kann durch Zusatz von Elektrolyten, wie z. B. Salzen der Hauptgruppen Ia, IIa, IIIa oder der Lanthaniden die Adsorptionszeit bei Raumtemperatur deutlich verkürzt oder überhaupt erst ermöglicht werden. Auch bei erhöhten Temperaturen der Kolloidlösung kann der Zusatz von Elektrolyten zur Lösung den Adsorptionsvorgang unterstützen.

Im Unterschied zu konventionellen Imprägniertechniken bereitet die Belegung von hydrophoben d. h. in Wasser schwer benetzbaren Kohlenstoffträgern bzw. kohlenstoffhaltigen Trägern mit den erfindungsgemäß zu verwendenden Kolloidlösungen keine Probleme. Dagegen wird die Adsorptionsgeschwindigkeit mit zunehmend hydrophilem Charakter der Kohlenstoffträger negativ beeinflußt.

Solche Träger weisen bedingt durch den Herstellprozeß oder durch eine oxidierende Wäsche oder eine oxidative Nachbehandlung einen hohen Anteil an Oberflächenoxiden auf. Der Grad der Hydrophilie wird durch den Anteil der Oberflächenoxide bestimmt. Durch Zusatz von Elektrolyten und/oder durch die Verwendung von Metallkolloidpulvern mit höheren Metallgehalten kann die Adsorption der Kolloide auf diesen Trägern erzwungen werden.

Die Reduktion der Katalysatoren sowie die Handhabung von Fällungsreagenzien und pH-Wert-Einstellungen mit Basen oder Säuren kann bei der erfindungsgemäßen Herstellung der Schalenkatalysatoren entfallen.

Mit den vorgenannten Methoden oder Kombinationen daraus können die Metallkolloide auf den unterschiedlichsten Trägermaterialen fixiert werden. Die Adsorption der Kolloide ist unabhängig von der Trägeroberfläche (BET-Oberfläche, geometrische Oberfläche als Funktion der Partikelgröße). Die Träger können als Pulver, in stückiger Form (Granulat, Pellets, Kugeln etc.), Wabenkörper oder als flächige oder dreidimensionale Substrate oder Strukturen (Schaumkeramiken, Sulzerpackungen) vorliegen. Beispiele für Trägermaterialien sind: Kohlenstoffträger, oxidische Träger, Carbonate, Sulfate, Zeolithe, Deloxane® und Polymere.

Als Kohlenstoffträger oder kohlenstoffhaltige Träger können eingesetzt werden: Aktivkohle, Ruß, graphitierter Ruß, Graphit, Carbide, geträgerte Carbide und deren physikalische Mischungen, wobei die Adsorption der Metallkolloide, wie oben erwähnt, unabhängig vom hydrophoben oder hydrophilen Charakter der kohlenstoffhaltigen Trägen immer durch geeignete Maßnahmen erzwungen werden kann.

Als oxidische Träger eignen sich insbesondere Oxide von einem oder mehreren Metallen aus den Gruppen IIA bis VA sowie IB bis VIIB und VIII des Periodensystems. Bevorzugt werden Aluminiumoxid, Siliziumdioxid, Titanoxid, Zirkonoxid, Magnesiumoxid sowie Mischoxide davon eingesetzt.

Nach Abscheidung des Metallkolloids auf einem pulverförmigen Trägermaterial wird der Katalysator abfiltriert und mit VE-Wasser gewaschen. Der so erhaltene Katalysator enthält ca. 60 Gew.-% Wasser und kann in dieser Form als wasserfeuchte Katalysatorpaste für katalytische Anwendungen in Flüssigphasenprozessen eingesetzt werden.

Wird eine trockene Darreichungsform benötigt, so kann der feuchte Katalysator vorzugsweise unter Vakuum getrocknet werden. Letzteres Vorgehen wird insbesondere bei nicht pulverförmigen Katalysatoren und Strukturen angewandt.

Falls das Tensid in der späteren Anwendung stört, kann es oxidativ oder thermisch unter Inertgasatmospäre bei Temperaturen zwischen 200 und 500°C zersetzt werden.

Die Abscheidung der Metallkolloide auf den Trägermaterialien erfolgt schalenförmig. Es werden für poröse Träger, wie z. B. Aktivkohle, Eindringtiefen von kleiner 200 nm bei Pulvern sowie 20 µm bei einem 2-4 mm Granulat gefunden. Diese Angaben gelten auch im wesentlichen für die anderen Trägermaterialen. Durch die schalenförmige Fixierung entwickeln die erfindungsgemäßen Katalysatoren bereits bei niedrigen Metallbeladungen höhere Hydrieraktivitäten als vergleichbare konventionell hergestellte Schalenkatalysatoren. Dies wird am exemplarischen Beispiel der Hydrierung von Nitrobenzol und Crotonsäure aufgezeigt(s. Beispiel 25). Die optimalen Beladungen mit der höchsten Aktivität bezogen auf das eingesetzte Metall werden bei Beladungen bis 2 Gew.-% beobachtet.

Für den Fachmann ist es offensichtlich, daß die Anwendung der beschriebenen, trägerfixierten Metallkolloidkatalysatoren nicht nur auf die folgenden Beispiele beschränkt ist. Sie können vielmehr vorteilhaft bei allen katalytischen Reaktionen eingesetzt werden, bei denen auch bisher schon konventionelle Schalenkatalysatoren mit einem oder zwei Metallen der Gruppen VIII und IB Verwendung finden. Besonders eignen sie sich für Hydrierreaktionen, Transferhydrierreaktionen und Oxidationsreaktionen mit molekularem Sauerstoff oder Wasserstoffperoxid. Die Hydrierreaktionen werden gewöhnlich bei Wasserstoffdrucken von bis zu 30 bar, bevorzugt jedoch bei atmosphärischem Druck, durchgeführt.

Besonders eignen sich die erfindungsgemäßen Katalysatoren für Hydrierungen oder Oxidationen von einfachen und/oder konjugierten C-C-Doppelbindungen aromatischer aber auch nichtaromatischer Verbindungen, von Carbonylverbindungen, von Carbonsäuren und deren Derivaten und von ungesättigten C-N-Verbindungen.

Weitere Einsatzfelder der erfindungsgemäßen Katalysatoren sind die Reduktion von N-O-Verbindungen sowie die Hydrogenolyse von C-O-, C-N und C-X-Verbindungen.

Besonders vorteilhaft können die erfindungsgemäßen Katalysatoren wegen ihrer geringen Schalendicke für die Umsetzung von Substraten mit Molekulargewichten über 250 g/mol eingesetzt werden, bei denen Katalysatoren mit größerer Schalendicke schon deutliche Aktivitätsverminderungen durch Begrenzungen des Stofftransportes zu den katalytisch aktiven Zentren zeigen.

Höhere Beladungen werden beispielsweise bei Elektrokatalysatoren für Brennstoffzellen benötigt. Es handelt sich bei diesen Katalysatoren um mono bis quaternäre Edelmetallkatalysatoren auf leitfähigen Kohlenstoffträgern in Pulverform. Die Abscheidung kann in Gegenwart von Elektrolyten durchgeführt werden, wodurch ohne weitere Nachbehandlung eine höhere Aktivität und Stabilität als Kathodenkatalysator in einer phosphorsauren Brennstoffzelle erzielt wird. Bei thermischer Nachbehandlung unter Inertgasatmosphäre und Temperaturen von 100 - 1000°C wurde überraschend gefunden, daß die Anfangsaktivität als auch die Alterungsstabilität des Katalysators entscheidend verbessert werden konnte. Im Vergleich dazu beobachtet man bei konventionell hergestellten Elektrokatalysatoren einen drastischen Aktivitätseinbruch während der Alterung.

Für die Präparation von erfindungsgemäßen Katalysatoren kommen in den folgenden Beispielen verschiedene Aktivkohlen und andere anorganische Trägermaterialien mit den in Tabelle 1 angeführten Eigenschaften zum Einsatz.

**Tabelle 1**

| Katalysatorträger | | | |
|---|---|---|---|
| Material | mittlere Partikelgröße [µm] | BET-Oberfläche [m²/g] | Bemerkungen |
| Aktivkohle A | 25 | 1050 | |
| " B | 24 | 900 | säuregewaschen |
| " C | 20 | 1150 | " |
| " D | 24 | 1150 | " |
| γ-Al₂O₃ | 26 | 90 | |
| α-Al₂O₃ | 10 | 5 | |
| CaCO₃ | 5,3 | 8 | |
| TiO₂ | < 1 | 50 | |
| Deloxan® | 100 | 550 | |
| SiO₂ | 17 | 60 | |
| Graphit | < 1 | 320 | |
| Leitfähigkeitsruß | < 1 | 80 | graphitiert |
| Deloxan: Markenzeichen der Degussa für ein organofunktionelles Polysiloxan | | | |

Während es sich bei den Aktivkohlen um hochporöse Träger handelt, deren hohe spezifische Oberfläche weitgehend auf der inneren Oberfläche der Porensysteme beruht, handelt es sich zum Beispiel bei α-Al₂O₃, CaCO₃, TiO₂, Graphit und Leitfähigkeitsruß um unporöse Materialien, deren spezifische Oberfläche weitgehend identisch ist mit der reinen geometrischen Oberfläche dieser feinteiligen Materialien.

### Beispiel 1

69.3 g Aktivkohle A wurden in 1.05 l vollentsalztem Wasser (VE-Wasser) 15 min bei Raumtemperatur suspendiert. Inzwischen wurden 0.7 g Platin in Form einer kolloidalen Sulfobetain-12-stabilisierten Lösung auf 50 ml Volumen verdünnt. Die verdünnte Pt-Kolloid-Lösung wurde binnen 5 min zur Trägersuspension getropft. Nach 1 h Rühren bei Raumtemperatur wurde der Katalysator abfiltriert und gewaschen. Der Pt-Gehalt des Katalysators betrug 0.9 Gew.-% bezogen auf seine Trockenmasse. Die Schalendicke dieses Katalysators, d. h. die Eindringtiefe den katalytisch aktiven Platins in die Partikel der Aktivkohle betrug 50 bis 100 nm.

Der resultierende, wasserfeuchte Katalysator mit einem Wassergehalt von ca. 60 Gew.-% kann in dieser Form für katalytische Anwendungen eingesetzt werden oder falls notwendig im Vakuum bei 80°C getrocknet werden.

### Beispiel 2

69.3 g säuregewaschener Aktivkohle B wurden in 300ml VE-Wasser 15 min bei Raumtemperatur suspendiert. Inzwischen wurden 0.7 g Platin in Form einer Sulfobetain-12-stabilisierten Pt-Kolloidlösung auf 50 ml Volumen verdünnt. Die verdünnte Pt-Kolloid-Lösung wurde binnen 5 min zur Trägersuspension getropft und die Reaktionsmischung auf 80°C erhitzt. Nach 20 min Rühren bei 80°C wurde der Katalysator heiß abfiltriert und gewaschen. Es wurde ein wasserfeuchter Katalysator mit einer Restfeuchte von 47.1 Gew.-% erhalten. Der Pt-Gehalt des fertigen Katalysators betrug 0.83 Gew.-% bezogen auf seine Trockenmasse.

### Beispiel 3

Analog Beispiel 1 wurde ein Katalysator auf einem säuregewaschenen Aktivkohleträger A hergestellt, jedoch wurden nur 300 ml VE-Wasser für die Trägersuspension verwendet. Für eine vollständige Adsorption des Pt-Kolloids mußte außerdem die Adsorptionszeit bei Raumtemperatur auf 2,5 h verlängert werden. Der Pt-Gehalt des Katalysators betrug 0.87 Gew.-% bezogen auf seine Trockenmasse.

### Beispiel 4

Analog Beispiel 3 wurde ein Pt-Ir-Katalysator ausgehend von einem Sulfobetain 12-stabilisierten Pt-Ir-Kolloid mit einem Pt/Ir Molverhältnis 96 : 4 hergestellt. Der wasserfeuchte Katalysator wurde bei 80°C im Vakuumtrockenschrank bis auf eine Restfeuchte kleiner 2 Gew.-% getrocknet. Der fertige Katalysator enthielt 0.90 Gew.-% Pt und 0.03 Gew.-% Ir.

### Beispiel 5

In 300 ml VE-Wasser wurden 0.07 g Magnesiumnitrat·Hexahydrat gelöst und anschließend 19.8 g Aktivkohleträgers B hinzugefügt. Nach 15 minütigem Suspendieren bei Raumtemperatur wurden 0.2 g Platin in Form einer Sulfobetain 12-stabilisierten Pt-Kolloidlösung (50 ml) binnen 5 min zugegeben. Es wurden noch weitere 60 min bei Raumtemperatur gerührt und der wasserfeuchte Katalysator abgetrennt und gewaschen. Der Pt-Gehalt betrug 0.89 Gew.-%.

### Beispiel 6

Analog Beispiel 5 wurde ein Katalysator auf Aktivkohle C hergestellt. Anstatt Magnesiumnitrat wurde jedoch 0.13 g Lanthannitrat·Hexahydrat verwendet. Der Pt-Gehalt des fertigen Katalysators betrug 0.87 Gew.-%.

### Beispiel 7

Analog Beispiel 5 wurde ein Katalysator unter Verwendung eines Sulfobetain 12-stabilisierten Pt-Kolloids hergestellt, das einen Metallgehalt von 19 Gew.-% Pt in Trockensubstanz aufwies. Dadurch konnte auf einen Zusatz von Elektrolyt, wie z.B. Magnesiumnitrat, verzichtet werden. Der fertige Katalysator enthielt 0.91 Gew.-% Pt.

### Beispiel 8

Analog Beispiel 1 wurde die doppelte bzw. die dreifache Menge Platin, zugegeben als 50 ml Sulfobetain 12-stabilisierte Pt-Kolloidlösung, adsorbiert. Der Pt-Gehalt des fertigen Katalysators.betrug 1.61 bzw. 2.3 Gew.-%.

Für die Adsorption der fünffachen Menge Platin in 50 ml-Kolloidlösung war der Zusatz von Elektrolyt erforderlich:

In 300 ml VE-Wasser wurden 0.77 g Magnesiumnitrat·Hexahydrat gelöst und anschließend 19 g des Aktivkohleträgers hinzugefügt. Nach 15 minütigem Suspendieren bei Raumtemperatur wurden 0.2 g Platin in Form einer Sulfobetain 12-stabilisierten Kolloidlösung (50 ml) binnen 5 min zugegeben. Es wurden noch weitere 60 min bei Raumtemperatur gerührt und der wasserfeuchte Katalysator abgetrennt und gewaschen. Der Pt-Gehalt betrug 3,92 Gew.-%.

### Beispiel 9

69.3 g Aktivkohle D wurden in 1.0 l vollentsalztem Wasser (VE-Wasser) 15 min bei Raum-temperatur suspendiert. 50 ml einer kolloidalen Pt-Lösung wurden aus 3.5 g Rewoteric AM DML-stabilisiertem Pt-Kolloidpulver mit einem Pt-Gehalt von 20 Gew.-% hergestellt und innerhalb von 5 min zur Trägersuspension zugetropft. Nach 1 h Rühren bei Raumtemperatur wurde der Katalysator abfiltriert und- gewaschen. Der Pt-Gehalt des Katalysators betrug 1.03 Gew.-%.

### Beispiel 10

Analog Beispiel 9 wurde ein Pt-Ir-Katalysator ausgehend von einem Rewoteric AM DML-stabilisierten Pt-Ir-Kolloid mit einem Pt/Ir-Molverhältnis 95 : 5 hergestellt. Der fertige Katalysator enthielt 0.91 Gew.-% Pt und 0.02 Gew.-% Ir.

### Beispiel 11

9.9 g γ-Aluminiumoxidpulver wurden in 150 ml VE-Wasser bei Raumtemperatur suspendiert. Eine wäßrige, Sulfobetain 12-stabilisierte Pt-Kolloidlösung, enthaltend 0,1g Pt verdünnt auf 20 ml, wurde in 5 min zugetropft. Nach weiteren 60 min Rühren bei Raumtemperatur wurde der Katalysator abfiltriert, gewaschen und bei 80°C im Vakuum bis zu einer Restfeuchte kleiner 2 Gew.-% getrocknet. Der Pt-Gehalt des fertigen Katalysators betrug 0.88 Gew.-%.

### Beispiel 12

9.9 g α-Aluminiumoxidpulver wurden in 150 ml VE-Wasser suspendiert und auf 80°C erhitzt. Eine wäßrige, Sulfobetain 12-stabilisierte Pt-Kolloidlösung, enthaltend 0,1g Pt verdünnt auf 20 ml, wurde in 5 min zugetropft. Nach weiteren 60 min Rühren bei 80°C wurde der Katalysator abfiltriert, gewaschen und bei 80°C im Vakuum bis zu einer Restfeuchte kleiner 2 Gew.-% getrocknet. Der Pt-Gehalt des fertigen Katalysators betrug 0.92 Gew.-%.

### Beispiel 13

Analog Beispiel 11 wurde ein Katalysator auf Calciumcarbonatpulver hergestellt. Der Pt-Gehalt des fertigen Katalysators betrug 1.2 Gew.-%.

### Beispiel 14

Analog Beispiel 11 wurde ein Katalysator auf Titandioxid hergestellt. Der Pt-Gehalt des fertigen Katalysators betrug 1.2 Gew.-%.

### Beispiel 15

Analog Beispiel 12 wurde ein Katalysator auf Deloxan® hergestellt. Nach Zugabe des Pt-Kolloids wurde die Temperatur für dessen Adsorption auf 75°C angehoben. Der fertige Katalysator enthielt 1.51 Gew.-%.

### Beispiel 16

Analog Beispiel 11 wurde ein Katalysator auf Siliciumdioxidpulver hergestellt. Der Pt-Gehalt des fertigen Katalysators betrug 0.99 Gew.-%.

### Beispiel 17

Analog Beispiel 11 wurde ein Katalysator auf Graphit hergestellt. Der Pt-Gehalt des fertigen Katalysators betrug 1,06 Gew.-%.

### Beispiel 18

Analog Beispiel 13 wurde die doppelte, dreifache und fünfache Menge Platin, zugegeben als 50 ml Sulfobetain 12-stabilisierte Pt-Kolloidlösung, adsorbiert. Der Pt-Gehalt des fertigen Katalysatoren betrug 2.04, 2.89 und 5.18 Gew.-%.

### Beispiel 19

Für die Adsorption der doppelten Menge Platin auf Aluminiumoxid (vgl. Beispiel 12) in 50 ml Sulfobetain 12-stabilisierter Pt-Kolloidlösung ist der Zusatz von Elektrolyt erforderlich:

In 150 ml 0.001 molarer Lanthannitrat-Lösung wurden 9.8 g des Aluminiumoxidpulvers suspendiert und bei Raumtemperatur wurden 0.2 g Platin in Form einer Sulfobetain 12-stabilisierten Kolloidlösung (50 ml) binnen 5 min zugegeben. Die Suspension wurde auf 80°C erhitzt und noch weitere 60 min bei dieser Temperatur gerührt. Der wasserfeuchte Katalysator wurde heiß abfiltriert, gewaschen und bei 80°C im Vakuumtrockenschrank bis zu einer Restfeuchte kleiner 2 Gew.-% getrocknet. Der Pt-Gehalt betrug 1.88 Gew.-%.

### Beispiel 20

Im folgenden wird exemplarisch die Herstellung eines Festbettkatalysators beschrieben. Das Volumen der Pt-Kolloidlösung wurde so gewählt, daß eine vollständige Aufnahme entsprechend dem Porenvolumen gewährleistet war.

45 ml einer wäßrigen Sulfobetain 12-stabilisierten Pt-Kolloidlösung, enthaltend 0.5 g Pt, wurden über einen Tropftrichter innerhalb von 30 Sekunden in eine bewegte Schüttung von 96.6 g Aktivkohlegranulat (BET-Oberfläche 1050 m²/g; Partikelgröße 2-4 mm) gegeben. Nach beendeter Zugabe wurde der Mischvorgang noch 3 min weitergeführt und der Katalysator bei 80°C im Vakuumtrockenschrank getrocknet. Der fertige Katalysator enthielt 0.5 Gew.-% Pt.

### Beispiel 21

9 g graphitierter Leitfähigkeitsruß (BET-Oberfläche 80 m²/g) wurden in 160 ml VE-Wasser suspendiert und auf 80°C erhitzt. Innerhalb von 5 min wurde 1 g Platin in Form einer Sulfobetain 12-stabilisierten Pt-Kolloidlösung (2.48 Gew.-% Pt) zugetropft. Es wurde noch weitere 30 min bei 80°C gerührt und dann der Katalysator heiß abfiltriert und gewaschen. Abschließend wurde der Katalysator bei 80°C im Vakuumtrockenschrank bis zu einer Restfeuchte kleiner 2 Gew.-% getrocknet. Der fertige Katalysator enthielt 9.2 Gew.-% Pt. Für den Einsatz als Elektrokatalysatoren in Brennstoffzellen kann das Schutzkolloid durch Temperaturbehandlung zwischen 300 und 900°C unter Inertgasatmosphäre entfernt werden.

### Beispiel 22

Analog Beispiel 21 wurde ein Rewoteric AM DML-stabilisiertes Pt-Kolloidpulver eingesetzt. 12 g Kolloidpulver enthaltend 2.64 g Pt wurden in 100 ml VE-Wasser resupendiert und innerhalb von 5 Min zu einer wäßrigen Suspension mit 23.76 g graphitiertem Rußträger gegeben. Der fertige Katalysator enthielt 9.5 Gew.-% Pt.

### Beispiel 23

Analog Beispiel 21 wurde eine modifizierte Herstellung so durchgeführt, daß nach 30 min bei 80 °C 12.99 g Lanthannitrat-Hexahydrat, gelöst in 50 ml VE-Wasser, hinzugegeben und weitere 30 min gerührt wurden. Danach wurde der Katalysator abgetrennt; gewaschen und im Vakuumtrockenschrank bei 80°C bis zu einer Restfeucht kleiner 2 Gew.-% getrocknet. Der Pt-Gehalt des fertigen Katalysators betrug 8,2 Gew.-%.

### Beispiel 24

Analog Beispiel 21 wurde ein Pt-Co-Kolloid mit einem Pt/Co-Molverhältnis von 96 : 4 eingesetzt. Anstatt 750 ml VE-Wasser wurden 800 ml 3.6 x 10⁻² molare Lanthannitrat-Lösung verwendet. Der fertige Katalysator enthielt 8.1 Gew.-% Pt und 0.11 Cew.-% Co.

### Beispiel 25

Einige ausgewählte Katalysatoren der vorstehenden Beispiele wurden bezüglich ihrer Aktivität bei der Niederdruckhydrierung von Nitrobenzol und Crotonsäure getestet.

Zur Hydrierung von Nitrobenzol wurden 1,8 g Nitrobenzol in 100 ml Ethanol gelöst und in Gegenwart von 0,1 g Katalysator in einem Niederdruckreaktor bei einer Temperatur von 30°C hydriert. Der Wasserstoff wurde bei einem Druck von 1,01 bar über einen Begasungsrührer in die Lösung eingeführt. Der Wasserstoffverbrauch pro Zeiteinheit wurde mit Hilfe eines Volumenstrommessers bestimmt. Die Reaktion wurde jeweils bis zum vollständigen Umsatz des Nitrobenzols geführt.

Die Ergebnisse der Hydrierungen sind in Tabelle 1 aufgelistet. Bei den in dieser Tabelle angegebenen massenspezifischen Aktivitäten handelt es sich um den maximal gemessenen Wasserstoffverbrauch pro Minute und Milligrammm Platin.

Die Hydrierung der Crotonsäure wurde in gleicher Weise vorgenommen. Es wurden jedoch 5,8 g Crotonsäure in 120 ml Ethanol in Gegenwart von 200 mg eines unter Vakuum getrockneten Katalysators hydriert.

Die Testhydrierungen wurden neben den erfindungsgemäßen Katalysatoren noch mit verschiedenen kommerziellen Edelmetallkatalysatoren auf Aktivkohleträgern durchgeführt. Es kamen hierfür die Katalysatoren F 103 R/W (1 % Pt auf Aktivkohle), F 103 XKY/W (1 % Pt auf Aktivkohle),
FI 103 XR/W (0,91 % Pt + 0,1 % Ir auf Aktivkohle),
F 107 R/W (5 % Pt auf Aktivkohle) und F 407 R/D (5 % Pt auf Aktivkohle) der Degussa AG zum Einsatz.

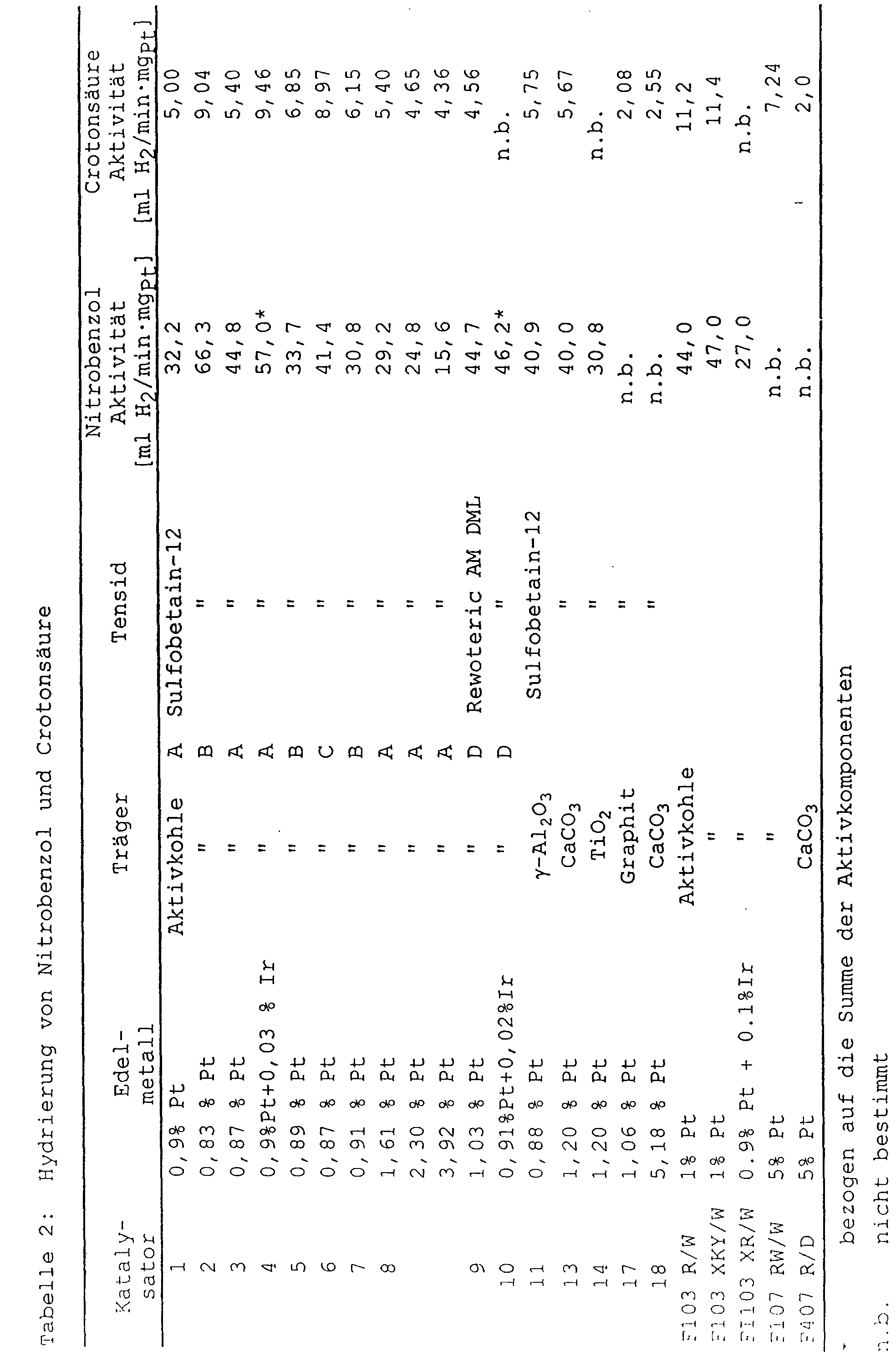

### Beispiel 26

Zur Bestimmung ihrer elektrochemischen Eigenschaften wurden die Katalysatoren aus den Beispielen 21 und 23 zu Gasdiffusionselektroden mit einem PTFE-Gehalt (Polyterafluorethylen) von 30 Gew.-% verarbeitet. Hierzu wurden die Katalysatoren in bekannter Weise in einer Suspension von PTFE dispergiert. Mit der resultierenden Suspension wurde ein mit PTFE hydrophobiertes Graphit papier beschichtet und die Beschichtung abschließend bei 340°C gesintert. Die Beschichtung wurde so eingestellt, daß der Platingehalt der fertigen Elektrode etwa 0,5 mg Pt/cm² betrug.

Ein jeweils 2 Quadratzentimeter großes Stück der so hergestellten Elektroden wurde in einer elektrochemischen Halbzelle gegen eine dynamische Wasserstoffelektrode (DHE: Dynamic Hydrogen Electrode) in 103 %iger Phosphorsäure bei einer Betriebstemperatur von 190°C bezüglich ihrer Fähigkeit, Sauerstoff zu reduzieren, untersucht.

Als Kenndaten wurden hierfür die sogenannte Sauerstoff-Massenaktivität und das Potential bei einem Stromfluß durch die Brennstoffzelle von 200 mA/mg Pt gemessen. Die Sauerstoff-Massenaktivität ist definiert als der sich bei einem Potential von 0,9 V einstellende Strom, bezogen auf die Menge Platin der Elektrode, gemessen in mA/mg Pt. Bei der Bestimmung beider Kenndaten diente Sauerstoff als Reaktant.

Bei den angegebenen Potentialen handelt es sich um Werte, die zur Elimination des Innenwiderstandes der elektrochemischen Zelle korrigiert wurden.

Beide Kenndaten wurden jeweils erst nach einer 3-stündigen konditionierenden Anfahrphase gemessen. Während der Anfahrphase befand sich die elektrochemische Halbzelle auf einer Betriebstemperatur von 190°C, jedoch blieb der Stromkreis während dieser Phase geöffnet, so daß kein Stom fließen konnte. Zur Bestimmung der Alterungsstabilität wurde das Potential bei 200 mA/mg Pt nach einer zusätzlichen Konditionierung von weiteren 19 Stunden bestimmt. Die Betriebsbedingungen während dieser Konditionierung entsprachen den Bedingungen während der Anfahrphase.

Die erfindungsgemäßen Katalysatoren der Beispiele 21 und 23 zeichnen sich durch eine hohe Alterungsstabilität aus (siehe Tabelle 3).

**Tabelle 3**

| Beispiel | Katalysator Gew.-% Pt | O₂-Massenaktivität bei 0.9 V | | | Potential in mV bei 200 mA/mg Pt | | |
|---|---|---|---|---|---|---|---|
| | | 3 h | 22 h | Δ | 3 h | 22 h | Δ |
| V6 | 10,0 | 49 | 32 | 17 | 830 | 795 | 35 |
| 21 | 9,2 | 26 | 17 | 9 | 804 | 759 | 45 |
| 21 (350°C) | 10,0 | 27 | 24 | 3 | 800 | 788 | 12 |
| 21 (900°C) | 10,0 | 40 | 35 | 5 | 823 | 815 | 8 |
| 23 | 8,2 | 47 | 30 | 17 | 833 | 802 | 31 |

Mit dem Katalysator von Beispiel 21 wurden 3 Messungen durchgeführt. Für die zweite und dritte Messung wurde der Katalysator für etwa eine Stunde bei 350°C beziehungsweise bei 900°C zur Zersetzung des Kolloids kalziniert. Diese Behandlung führt zu einer wesentlichen Steigerung der Alterungsstabilität. Bemerkenswert ist, daß der Katalysator von Beispiel 23, der unter Zusatz eines Lanthanelektrolyten zur Kolloidlösung hergestellt wurde, ohne Kalzinierung schon eine wesentlich bessere Massenaktivität und Alterungsstabilität als der Katalysator von Beispiel 21 aufweist.

## Patentansprüche

1. Schalenkatalysator enthaltend auf einem pulverförmigen Träger ein oder mehrere Metalle aus den Gruppen VIII und IB des Periodensystems,
**dadurch gekennzeichnet,**
daß die Metalle auf dem Träger in feinverteilter Form innerhalb einer Oberflächenschale von höchstens 200 nm, bevorzugt von höchstens 100 nm, Dicke mit Kristallitgrößen von höchstens 10 nm, vorzugsweise kleiner 3 nm, in Konzentrationen von 0,05 bis 35 Gew.-% bezogen auf die Trockenmasse des Katalysators vorliegen, erhältlich wird Verwendung von vorgeformten tensidstabilisierten mono- oder bimetallischen Kolloiden von Metallen aus den Gruppen VIII und Ib des Periodensystems, wobei die Kolloide durch stark hydrophile Tenside stabilisiert sind und zur Belegung von Trägern wäßrige Lösungen eines oder mehrerer dieser Kolloide eingesetzt werden.

2. Schalenkatalysatoren nach Anspruch 1,
**dadurch gekennzeichnet,**
daß als Träger Kohlenstoffträger, oxidische Träger eines oder mehrerer Metalle der Gruppen IIA bis VA sowie IB bis VIIB und VIII des Periodensystems, Carbonate, Sulfate, Zeolithe, organofunktionelle Polysiloxane und Ionenaustauscherharze verwendet werden.

3. Schalenkatalysator nach Anspruch 2,
**dadurch gekennzeichnet,**
daß hydrophile Kohlenstoffträger oder hydrophobe Kohlenstoffträger verwendet werden.

4. Schalenkatalysatoren nach einem der vorstehenden Ansprüche,
**dadurch gekennzeichnet,**
daß die Metalle in Konzentrationen von 0,5 bis 5 Gew.-% auf dem Träger vorliegen.

5. Schalenkatalysator nach Anspruch 3,
**dadurch gekennzeichnet,**
daß Pt in einer Konzentration von 7,5 bis 35 Gew.-% auf einem hydrophoben Kohlenstoffträger vorliegt.

6. Verfahren zur Herstellung von Schalenkatalysatoren gemäß Anspruch 1 unter Verwendung von vorgeformten, tensidstabilisierten mono- oder bimetallischen Kolloiden von Metallen aus den Gruppen VIII und IB des Periodensystems,
**dadurch gekennzeichnet,**
daß die Kolloide durch stark hydrophile Tenside stabilisiert sind und zur Belegung von Trägern wäßrige Lösungen eines oder mehrerer dieser Kolloide eingesetzt werden.

7. Verfahren nach Anspruch 6,
**dadurch gekennzeichnet,**
daß die Metalle in den Kolloiden eine Partikelgröße kleiner als 10, bevorzugt kleiner als 5 und insbesondere kleiner als 3 nm aufweisen.

8. Verfahren nach einem der Ansprüche 6 bis 7,
**dadurch gekennzeichnet,**
daß die Metallkolloide in Konzentrationen bis zu 25 Gew.-% Metallgehalt bezogen auf das Gesamtgewicht der Lösung eingesetzt werden.

9. Verfahren nach einem der Ansprüche 6 bis 8,
**dadurch gekennzeichnet,**
daß der Metallgehalt an der Trockenmasse der Kolloide wenigstens 5 Gew.-% beträgt.

10. Verfahren nach einem der Ansprüche 6 bis 9,
**dadurch gekennzeichnet,**
daß als Träger Kohlenstoffträger, Oxide eines oder mehrerer Metalle der Gruppen IIA bis VA sowie IB bis VIIB und VIII des Periodensystems, Carbonate, Sulfate, Zeolithe, organofunktionelle Polysiloxane oder Ionenaustauscherharze in Form von Pulvern oder geformten Körpern verwendet werden.

11. Verfahren nach einem der Ansprüche 6 bis 10,
**dadurch gekennzeichnet,**
daß Konzentration und Volumen der Kolloidlösung so auf die zu belegende Trägermenge abgestimmt werden, daß der Metallgehalt am fertigen Katalysator 0,05 bis 35 Gew.-% beträgt.

12. Verwendung der Schalenkatalysatoren nach den Ansprüchen 1 bis 5 für die Hydrierung oder Oxidation einfacher und/oder konjugierter C-C-Doppelbindungen, die nicht Bestandteil eines aromatischen Systems sind, von Carbonylverbindungen, von Carbonsäuren und deren Derivaten und von ungesättigten C-N-Bindungen.

13. Verwendung der Schalenkatalysatoren nach den Ansprüchen 1 bis 5 für die Reduktion von N-O-Verbindungen.

14. Verwendung der Schalenkatalysatoren nach den Ansprüchen 1 bis 5 für die Hydrogenolyse von C-O, C-N und C-X-Verbindungen (X = F, Cl, Br, J).

15. Verwendung der Schalenkatalysatoren nach den Ansprüchen 1 bis 5 als Elektrokatalysatoren in Brennstoffzellen.

16. Elektrokatalysator gemäß Anspruch 1 enthaltend ein oder mehrere Metalle aus der Gruppe VIII des Periodensystems auf einem leitfähigen Träger.

## Claims

1. Shell catalysts containing, on a powdered support, one or more metals from the groups VIII and IB of the periodic system,
characterised in that
the metals are present on the support in finely divided form within an outer shell with a thickness of at most 200 nm, preferably at most 100 nm, with crystallite sizes of at most 10 nm, preferably less than 3 nm, in concentrations of 0.05 to 35 wt.% with respect to the dry weight of the catalyst, obtainable by the use of preformed, surfactant-stabilised mono-or bimetallic colloids of metals from groups VIII and IB of the periodic system, wherein the colloids are stabilised by highly hydrophilic surfactants and aqueous solutions of one or more of these colloids are used to coat the supports.

2. Shell catalysts according to Claim 1,
characterised in that
carbon supports, oxidic supports of one or more metals from groups IIA to VA and IB to VIIB and VIII in the periodic system, carbonates, sulfates, zeolites, organofunctional polysiloxanes and ion exchange resins are used as supports.

3. Shell catalysts according to Claim 2,
characterised in that
hydrophilic carbon supports or hydrophobic carbon supports are used.

4. Shell catalysts according to one of the preceding Claims,
characterised in that
the metals are present on the support in concentrations of 0.5 to 5 wt.%.

5. Shell catalysts according to Claim 3,
characterised in that
Pt is present at a concentration of 7.5 to 35 wt.% on a hydrophobic carbon support.

6. A process for preparing shell catalysts in accordance with Claim 1 using preformed, surfactant-stabilised mono or bimetallic colloids of metals from groups VIII and IB in the periodic system,
characterised in that
the colloids are stabilised by highly hydrophilic surfactants and aqueous solutions of one or more of these colloids are used to coat the supports.

7. A process according to Claim 6,
characterised in that
the metals in the colloids have a particle size of less than 10, preferably less than 5 and in particular less than 3 nm.

8. A process according to one of Claims 6 to 7,
characterised in that
the metal colloids are used at concentrations of up to 25 wt.% of metal with respect to the total weight of solution.

9. A process according to one of Claims 6 to 8,
characterised in that
the metal content of the dry weight of colloids is at least 5 wt.%.

10. A process according to one of Claims 6 to 9,
characterised in that
carbon supports, oxides of one or more metals from groups IIA to VA and IB to VIIB and VIII in the periodic system, carbonates, sulfates, zeolites, organofunctional polysiloxanes or ion exchange resins, in the form of powders or moulded bodies, are used as supports.

11. A process according to Claims 6 to 10,
characterised in that
the concentration and volume of the colloid solution are adapted to the amount of support being coated in such a way that the metal concentration in the final catalyst is 0.05 to 35 wt.%.

12. Use of the shell catalysts according to Claims 1
to 5 for hydrogenating or oxidising isolated and/or conjugated C-C double bonds which are not a component of an aromatic system, and also carbonyl compounds, carboxylic acids and their derivatives and unsaturated C-N bonds.

13. Use of shell catalysts according to Claims 1 to 5 for the reduction of N-O compounds.

14. Use of shell catalysts according to Claims 1 to 5 for the hydrogenolysis of C-O, C-N and C-X compounds (X = F, Cl, Br, I).

15. Use of shell catalysts according to Claims 1 to 5 as electrocatalysts in fuel cells.

16. Electrocatalysts in accordance with Claim 1 containing one or more metals from group VIII of the periodic system on a conductive support.

## Revendications

1. Catalyseur en coque contenant sur un support pulvérulent, un ou plusieurs métaux choisis dans les groupes VIII et Ib du système périodique,
caractérisé en ce que
les métaux sur le support, se présentent sous forme finement divisée à l'intérieur d'une coque de surface d'au maximum 200 nm, de préférence d'au maximum 100 nm, d'épaisseur avec des tailles de critallite d'au maximum 10 nm, de préférence inférieures à 3 nm, à des concentrations allant de 0,05 à 35 % en poids rapporté à la masse sèche du catalyseur, accessible par utilisation de colloïdes mono ou bimétalliques, préformés stabilisés par un agent tensioactif, de métaux choisis parmi le groupe VIII et Ib du système périodique, dans lequel les colloïdes sont stabilisés par des agents tensioactifs fortement hydrophiles et dans lequel en vue du revêtement des supports, des solutions aqueuses d'un ou plusieurs de ces colloïdes sont mises en oeuvre.

2. Catalyseur en coque selon la revendication 1,
caractérisé en ce que
comme support on utilise des supports en carbone, des supports oxydiques, d'un ou plusieurs métaux des groupes IIA à VA ainsi que IB à VIIB et VIII du système périodique, des carbonates, des sulfates, des zéolites, des polysiloxanes organofonctionnels et des résines échangeuses d'ions.

3. Catalyseur en coque selon la revendication 2,
caractérisé en ce qu'
on utilise des supports en carbone hydrophiles ou des supports en carbone hydrophobes.

4. Catalyseur en coque selon l'une quelconque des revendications précédentes,
caractérisé en ce que
les métaux sont présents à des concentrations allant de 0,5 à 5 % en poids sur le support.

5. Catalyseur en coque selon la revendication 3,
caractérisé en ce que
le Pt est présent à une concentration de 7,5 à 35 % en poids sur un support carboné hydrophobe.

6. Procédé de préparation de catalyseurs en coque conformément à la revendication 1, par utilisation de colloïdes préformés, stabilisés par un agent tensioactif, mono ou bimétalliques de métaux choisis dans les groupes VIII et IB du système périodique,
caractérisé en ce que
les colloïdes sont stabilisés par des agents tensioactifs fortement hydrophiles, et on met en oeuvre pour le revêtement des supports, des solutions aqueuses d'un ou plusieurs de ces colloïdes.

7. Procédé selon la revendication 6,
caractérisé en ce que
les métaux dans les colloïdes possèdent une taille de particules inférieure à 10, de préférence inférieure à 5 et en particulier inférieure à 3 nm.

8. Procédé selon l'une quelconque des revendications 6 à 7,
caractérisé en ce que
les colloïdes de métal sont mis en oeuvre à des concentrations allant jusqu'à 25 % en poids de teneur en métal, rapporté au poids total de la solution.

9. Procédé selon l'une quelconque des revendications 6 à 8,
caractérisé en ce que
la teneur en métal sur la masse sèche des colloïdes s'élève à au moins 5 % en poids.

10. Procédé selon l'une quelconque des revendications 6 à 9,
caractérisé en ce que
comme supports on utilise des supports carbonés, des oxydes d'un ou plusieurs métaux des groupes IIA à VA ainsi que IB à VIIB et VIII du système périodique, des carbonates, des sulfates, des zéolites, des polysiloxanes organofonctionnels ou des résines échangeuses d'ions, sous forme de poudres ou de solides moulés .

11. Procédé selon l'une quelconque des revendications 6 à 10,
caractérisé en ce que
la concentration et le volume de la solution de colloïde sont mis en accord avec la quantité de support à déposer de telle sorte que la teneur en métal sur le catalyseur tout prêt s'élève de 0,05 à 35 % en poids.

12. Utilisation des catalyseurs en coque, selon les revendications 1 à 5, pour l'hydrogénation ou l'oxydation de doubles liaisons C-C, simples et/ou conjuguées qui ne sont pas un constituant d'un système aromatique, à partir de composés carbonylés, d'acides carboxyliques et de leurs dérivés et de liaisons C-N non saturées.

13. Utilisation des catalyseurs en coque selon les revendications 1 à 5, pour la réduction de composés N-O.

14. Utilisation de catalyseurs en coque selon les revendications 1 à 5 pour l'hydrogénolyse de composés C-O, C-N et C-X (X = F, Cl, Br, I) .

15. Utilisation des catalyseurs en coque selon les revendications 1 à 5 comme catalyseurs électriques dans des cellules à combustible.

16. Catalyseur électrique conformément à la revendication 1, contenant un ou plusieurs métaux choisis dans le groupe VIII du système périodique, sur un support conducteur.
